(19) Europäisches Patentamt
European Patent Office
Office européen des brevets

(11) **EP 4 178 280 A1**

(12) **EUROPEAN PATENT APPLICATION**
published in accordance with Art. 153(4) EPC

(43) Date of publication:
**10.05.2023 Bulletin 2023/19**

(21) Application number: **21831696.6**

(22) Date of filing: **02.07.2021**

(51) International Patent Classification (IPC):
**H04W 56/00** (2009.01)

(52) Cooperative Patent Classification (CPC):
**H04L 5/00; H04W 56/00**

(86) International application number:
**PCT/CN2021/104310**

(87) International publication number:
**WO 2022/002263 (06.01.2022 Gazette 2022/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **03.07.2020 CN 202010637358**

(71) Applicant: **Vivo Mobile Communication Co., Ltd.
Dongguan, Guangdong 523863 (CN)**

(72) Inventors:
• **PENG, Shuyan
Dongguan, Guangdong 523863 (CN)**
• **LIU, Jinhua
Dongguan, Guangdong 523863 (CN)**
• **WANG, Huan
Dongguan, Guangdong 523863 (CN)**

(74) Representative: **Raffay & Fleck
Patentanwälte
Grosse Bleichen 8
20354 Hamburg (DE)**

(54) **INDICATION METHOD AND DEVICE FOR TIMING OFFSET VALUE**

(57) Disclosed are an indication method and device for a timing offset value, which are used for solving the problem of the inability to meet the requirement of synchronization between links in the relevant art. The method may be applied to a first communication device, and comprises: receiving first signaling from a second communication device; and acquiring a timing offset value according to the first signaling, wherein the timing offset value is used for adjusting the timing of the first communication device. The first communication device comprises an IAB node, and the second communication device comprises a parent node or an IAB donor node or an IAB sub-node of the IAB node; or, the first communication device comprises a terminal, and the second communication device comprises an IAB node or an IAB donor node which serves the terminal.

<u>200</u>

Receive first signaling from a second communications device ∼ S202

↓

Obtain a timing offset value based on the first signaling, where the timing offset value is used to adjust timing of a first communications device ∼ S204

FIG. 2

## Description

## CROSS-REFERENCE TO RELATED APPLICATIONS

This application claims priority to Chinese Patent Application No. 202010637358.0 filed in China on July 3, 2020 and entitled "TIMING OFFSET VALUE INDICATION METHOD AND DEVICE", which is incorporated herein by reference in its entirety.

## TECHNICAL FIELD

This application relates to the field of communications technologies, and in particular, to a timing offset value indication method and a device.

## BACKGROUND

An integrated access and backhaul (Integrated Access and Backhaul, IAB) system includes an IAB node (node). One IAB node includes a mobile termination (Mobile Termination, MT) functional part and a distributed unit (Distributed Unit, DU) functional part. Using MT, the IAB node can find an upstream access point (that is, parent IAB node) and establish a wireless connection with a DU of the upstream access point. A DU of the IAB node provides a cell service for a child node, that is, the DU can provide an access service for LTE (User Equipment) or MT of a child IAB node.

In the IAB node, multiplexing of frequency division multiplexing (FDM, Frequency Division Multiplexing)/space division multiplexing (SDM, Space Division Multiplexing) needs to be supported between MT and a DU, that is, the DU and the MT perform receiving and sending at the same time, the MT and the DU perform sending at the same time or perform receiving at the same time, or one of the MT and the DU performs sending and the other one performs receiving at the same time.

A method and scope of timing advance (Timing advance, TA) indication defined in the related art are unable to meet a requirement of some scenarios in an IAB system, that is, based on TA indication, a need for synchronization between links in the above scenarios cannot be met after adjustment. Therefore, it is necessary to provide a new timing indication solution.

## SUMMARY

Embodiments of this application are intended to provide a timing offset value indication method and a device, so as to resolve a problem that a need for synchronization between links cannot be met in the related art.

To resolve the foregoing technical problem, this application is implemented as follows.

According to a first aspect, a timing offset value indication method is provided and applied to a first communications device. The method includes: receiving first signaling from a second communications device; and obtaining a timing offset value based on the first signaling. The timing offset value is used to adjust timing of the first communications device. The first communications device includes an integrated access and backhaul IAB node, and the second communications device includes a parent node of the IAB node, an IAB donor node, or a child IAB node. Alternatively, the first communications device includes a terminal, and the second communications device includes an IAB node that serves the terminal or an IAB donor node.

According to a second aspect, a timing offset value indication method is provided and applied to a second communications device. The method includes sending first signaling. The first signaling is used for a first communications device to obtain a timing offset value, and the timing offset value is used to adjust timing of the first communications device. The first communications device includes an integrated access and backhaul IAB node, and the second communications device includes a parent node of the IAB node, an IAB donor node, or a child IAB node. Alternatively, the first communications device includes a terminal, and the second communications device includes an IAB node that serves the terminal or an IAB donor node.

According to a third aspect, a first communications device is provided and includes: a receiving module, configured to receive first signaling from a second communications device; and an obtaining module, configured to obtain a timing offset value based on the first signaling, where the timing offset value is used to adjust timing of the first communications device. The first communications device includes an integrated access and backhaul IAB node, and the second communications device includes a parent node of the IAB node, an IAB donor node, or a child IAB node. Alternatively, the first communications device includes a terminal, and the second communications device includes an IAB node that serves the terminal or an IAB donor node.

According to a fourth aspect, a second communications device is provided and includes:
a sending module, configured to send first signaling, where the first signaling is used for a first communications device to obtain a timing offset value, and the timing offset value is used to adjust timing of the first communications device. The first communications device includes an integrated access and backhaul IAB node, and the second communications device includes a parent node of the IAB node, an IAB donor node, or a child IAB node. Alternatively, the first communications device includes a terminal, and the second communications device includes an IAB node that serves the terminal or an IAB donor node.

According to a fifth aspect, a first communications device is provided. The first communications device includes a processor, a memory, and a program or an instruction stored in the memory and capable of running on the processor, where when the program or the instruction is executed by the processor, the steps of the method according to the first aspect are implemented.

According to a sixth aspect, a second communications device is provided. The second communications device includes a processor, a memory, and a program or an instruction stored in the memory and capable of running on the processor, where when the program or the instruction is executed by the processor, the steps of the method according to the second aspect are implemented.

According to a seventh aspect, a readable storage medium is provided. The readable storage medium stores a program or an instruction, and when the program or the instruction is executed by a processor, the method according to the first aspect is implemented, or the method according to the second aspect is implemented.

According to an eighth aspect, a chip is provided. The chip includes a processor and a communications interface, the communications interface is coupled to the processor, and the processor is configured to run a program or an instruction, to implement the method according to the first aspect, or the method according to the second aspect.

In embodiments of this application, a first communications device can receive first signaling from a second communications device, and a timing offset value can be obtained based on the first signaling. The timing offset value is used to adjust timing of the first communications device. The embodiments of this application can meet a need for synchronization between links, to reduce interference between systems, thereby meeting a normal need for communication.

**BRIEF DESCRIPTION OF DRAWINGS**

FIG. 1 is a block diagram of a wireless communications system according to an embodiment of this application;
FIG. 2 is a schematic flowchart of a timing offset value indication method according to an embodiment of this application;
FIG. 3 is a schematic diagram of a timing offset value indication method in an application scenario according to an embodiment of this application;
FIG. 4 is a specific schematic diagram of a timing offset value indication method according to an embodiment of this application;
FIG. 5 is a schematic diagram of a format of first signaling according to an embodiment of this application;
FIG. 6 is a schematic diagram of a format of first signaling according to another embodiment of this application;
FIG. 7 is a schematic diagram of a format of first signaling according to another embodiment of this application;

FIG. 8 is a schematic diagram of a format of first signaling according to another embodiment of this application;
FIG. 9 is a schematic diagram of a format of first signaling according to another embodiment of this application;
FIG. 10 is a schematic diagram of a format of first signaling according to another embodiment of this application;
FIG. 11 is a schematic flowchart of a timing offset value indication method according to another embodiment of this application;
FIG. 12 is a schematic structural diagram of a first communications device according to an embodiment of this application;
FIG. 13 is a schematic structural diagram of a second communications device according to an embodiment of this application;
FIG. 14 is a schematic structural diagram of a communications device according to an embodiment of this application; and
FIG. 15 is a schematic structural diagram of a network-side device according to an embodiment of this application.

**DESCRIPTION OF EMBODIMENTS**

The following clearly and completely describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application without creative efforts shall fall within the protection scope of this application.

The terms "first", "second", and the like in the specification and claims of this application are used to distinguish between similar objects instead of describing a specific order or sequence. It should be understood that, data termed in such a way is interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, "and/or" in the specification and claims represents at least one of connected objects. Symbol "/" in the specification generally represents an "or" relationship between associated objects.

It should be noted that the technology described in the embodiments of this application is not limited to long term evolution (Long Term Evolution, LTE)/LTE-advanced (LTE-Advanced, LTE-A) systems, but can also be used in various wireless communications systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application may be used interchangeably. The technologies described can be applied to both the systems and the radio technologies mentioned above as well as to other systems and radio technologies. However, in the following descriptions, a new radio (New Radio, NR) system is described for an illustration purpose, and NR terms are used in most of the following descriptions, although these technologies may also be applied to other applications than an NR system application, such as a 6th generation (6th Generation, 6G) communications system.

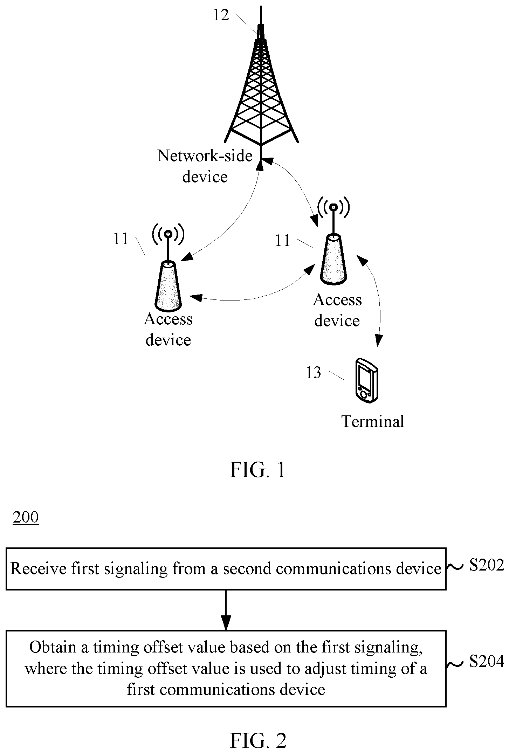

FIG. 1 is a block diagram of a wireless communications system to which embodiments of this application can be applied. The wireless communications system includes an access device 11, a network-side device 12, and a terminal 13. The access device 11 may also be a terminal or an IAB node. The IAB node may include a mobile termination (Mobile Termination, MT) functional part and a distributed unit (Distributed Unit, DU) functional part. The DU can provide a network service for another access device. The MT may be regarded as an ordinary terminal, with a function of ordinary terminal accessing the network side. The terminal may be a terminal device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable device), vehicle user equipment (VLTE), and pedestrian user equipment (PUE). The wearable device includes a bracelet, a headset, and glasses. It should be noted that a specific type of the IAB node is not limited in the embodiments of this application. The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a Node B, an evolved node B (eNB), a next generation node B (gNB), a home NodeB, a home evolved NodeB, a WLAN access point, a Wi-Fi node, a transmitting receiving point (Transmitting Receiving Point, TRP), or some other appropriate term in the art. As long as the same technical effect is achieved, the base station is not limited to a specific technical term. It should be noted that the base station in the NR system is taken only as an example in the embodiments of this application, but a specific type of the base station is not limited.

The following describes in detail a timing offset value indication method and a device provided in the embodiments of this application through specific embodiments and application scenarios thereof with reference to the accompanying drawings.

As shown in FIG. 2, an embodiment of this application provides a timing offset value indication method 200. The method can be executed by a first communications device. In other words, the method can be executed by software or hardware installed on the first communications device. The method includes the following steps.

S202: Receive first signaling from a second communications device.

S204: Obtain a timing offset value based on the first signaling, where the timing offset value is used to adjust timing of the first communications device.

The first communications device includes an integrated access and backhaul IAB node, and the second communications device includes a parent node of the IAB node, an IAB donor node, or a child IAB node. Alternatively, the first communications device includes a terminal, and the second communications device includes an IAB node that serves the terminal or an IAB donor node.

The first signaling may be media access control control element (Media Access Control Control Element, MAC CE) signaling, random access response (Random Access Response, RAR) signaling, radio resource control (Radio Resource Control, RRC) signaling, downlink control information (Downlink Control Information, DCI) signaling, or FI-Application Protocol (Application Protocol, AP) signaling, or backhaul adaptation protocol (Backhaul Adaptation Protocol, BAP) protocol data unit (Protocol Data Unit, PDU) signaling.

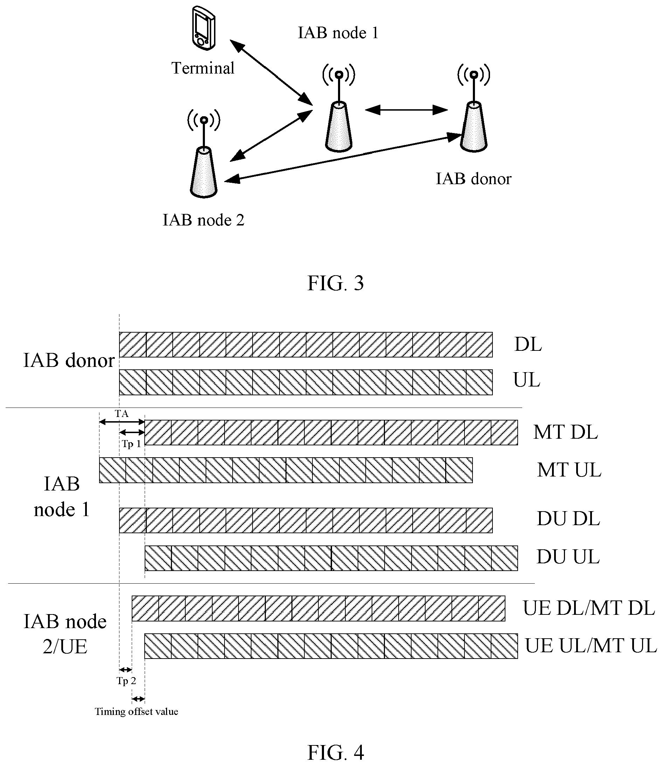

In an example, the first communications device is an IAB node, and the first signaling is from a parent node of the IAB node, an IAB donor node, or a child IAB node. For example, in FIG. 3, the first communications device may be an IAB node 2 in FIG. 3. The first signaling may be sent to the IAB node 2 by an IAB node 1, or may also be sent to the IAB node 2 by an IAB donor (donor), or may also be reported to the IAB node 2 by a child IAB node of the IAB node 2. The child IAB node of the IAB node 2 is not shown in FIG. 3. In FIG. 3, the IAB donor communicates with the IAB node 2 through F1-AP signaling.

In another example, the first communications device is a terminal (such as UE), and the first signaling is from an IAB node that serves the terminal or an IAB donor node. For example, in FIG. 3, the first communications device may be the terminal in FIG. 3. The first signaling may be sent to the terminal by the IAB node 1, or may also be sent to the terminal by the IAB donor (donor).

The timing offset value may be a timing offset value of an uplink (UL) of the first communications device compared with a downlink (DL), or a timing offset value of the downlink of the first communications device compared with the uplink. For MT of an IAB node (hereinafter referred to as IAB-MT) and a terminal, an LTL refers to sending and a DL refers to receiving. For a DU of the IAB node (hereinafter referred to as IAB-DU), the LTL refers to receiving and the DL refers to sending. Therefore, the timing offset value may be referred to as a timing offset value of sending of the first communications device compared to the receiving or a timing offset value of receiving of the first communications device compared to the sending.

It should be noted that the timing offset value mentioned in each embodiment of this application is different from a traditional concept of timing advance (Timing advance, TA). For example, a specific difference is that TA indicated by an RAR in the related art may only be positive, while the timing offset value in each embodiment of this application may be positive or negative. For another example, a range of the timing offset value is larger than a range of the TA. Therefore, the timing offset value mentioned in various embodiments of this application may also be replaced by another technical term, such as an extended TA.

In the timing offset value indication method provided in this embodiment of this application, the first communications device can receive the first signaling from the second communications device, and obtain the timing offset value based on the first signaling. The timing offset value is used to adjust timing of the first communications device. This embodiment of this application can meet a need for synchronization between links, to reduce interference between systems, thereby meeting a normal need for communication.

For ease of understanding, the timing offset value indication method provided in this embodiment of this application is described in detail below with reference to a specific application scenario.

Referring to FIG. 3 and FIG. 4, timing synchronization of the IAB node has been preliminarily defined in the related art. In a case that the IAB node 1 operates under timing in case 7 (case 7), DU RX (or DU LTL) of the IAB node 1 synchronizes with MT RX (or MT DL) of the IAB node 1 (referring to FIG. 4). In addition, the DU DL (or DU TX) of the IAB node 1 is aligned with a DL of a parent IAB node (that is, IAB donor).

In FIG. 4, Tp 1 is propagation delay from the parent IAB node (that is, IAB donor) of the IAB node 1 to IAB node 1. Tp 2 is propagation delay from the child IAB node (that is, IAB node 2) of the IAB node 1 or UE served by the IAB node 1 to the IAB node 1. It can be observed that a timing difference of MT UL/MT TX/UE UL of the IAB node 2 produces a large negative absolute value compared with that of MT DL/MT RX/UE DL of the IAB node 2. This negative timing indication value exceeds an indication range of the existing signaling (that is, Timing Advance Command MAC CE). To be specific, TA signaling needs to indicate a large negative value, so as to meet the timing in case 7, and does not exclude the use of other timing situations. Therefore, that the first communications device in each embodiment of this application obtains the timing offset value may be that the IAB node 2 or the UE obtains the timing offset value as shown in FIG. 3 and FIG. 4. A specific meaning of the timing offset value may be seen in an instruction in FIG. 4. The timing offset value provided in this embodiment of this application is mainly used to keep the DU and UL of the IAB node 1 synchronized.

For the above application scenario, a TA solution in the related art cannot achieve link synchronization, specifically: (a) the RAR can only indicate positive TA; and (b) a range of a negative value indicated by a TA adjustment MAC CE is small, so that a requirement of the above scenario cannot be met.

The above describes an optional application scenario of this embodiment of this application with reference to FIG. 3 and FIG. 4. The following describes in detail the timing offset value indication method provided in this embodiment of this application.

Optionally, in S202 of the embodiment 200, the receiving first signaling from a second communications device includes at least one of the following:

(1) receiving first signaling from the second communications device based on configuration information; and
(2) receiving the first signaling from the second communications device based on capability information of the first communications device.

The configuration information may be configured as whether the first communications device receives the first signaling or configured as receiving the first signaling or the second signaling. Certainly, the first communications device in the embodiment 200 is configured to receive the first signaling.

In other examples, before S202, the first communications device can also receive RRC signaling for configuring a signaling type used for the first communications device. The RRC signaling is used for configuring the signaling type used for the first communications device. The signaling type includes at least one of the first signaling and second signaling. The second signaling is used for configuring or indicating TA for the first communications device. The second signaling may be TA instruction signaling supported by an existing protocol.

The capability information indicates whether the first communications device can receive the first signaling. In this example, the first communications device can report capability (capability) thereof, or a protocol stipulates that the first communications device must support this capability, so that the second communications device can consider whether the first communications device can receive the first signaling based on the capability of the first communications device. For example, only an evolved IAB/UE can receive the first signaling. A traditional IAB/UE cannot receive/demodulate the first signaling. The traditional IAB/UE is IAB/UE that supports existing protocol functions.

Optionally, the first signaling mentioned in the embodiment 200 is MAC CE signaling. An absolute value of a maximum negative offset value that can be indicated by the MAC CE signaling is not smaller than an absolute value of a maximum negative offset value that can be indicated by an existing TA adjustment MAC CE (that is, second signaling). For example, a maximum absolute value of a negative offset value indicated by the MAC CE signaling is -1939; an indicated maximum absolute value of a negative offset value is -1923; an indicated maximum absolute value of a negative offset value is -3878; or an indicated maximum absolute value of a negative offset value is -3846. In this way, the first communications device can further calculate a final timing offset value through other calculations based on the negative offset value (assumed to be n) indicated by the MAC CE signaling, for example, the final timing offset value is calculated based on the following formula:

$$N = N_{old} + n * 16 * 64 / 2^{\mu}$$

In this formula, $N$ is the finally calculated timing offset value. $N_{old}$ is a previous timing offset value, or an old timing offset value. n is an offset value (positive or negative) indicated by the MAC CE signaling. $\mu$ is a parameter related to subcarrier spacing.

Optionally, the obtaining a timing offset value based on the first signaling mentioned in the embodiment 200 includes one of the following:

(1) An indication value of the first signaling is used as the timing offset value. In this example, the first signaling can directly indicate the final timing offset value, and the timing offset value may be positive or negative.

(2) The timing offset value is obtained based on one of an initial timing offset value and a timing offset value last determined, and an current offset value indicated by the first signaling. In this example, the first signaling can indicate an offset value. The offset value may be positive or negative. The first communications device can add or subtract the offset value from the initial timing offset value, to obtain the final timing offset value, or add or subtract the offset value from the timing offset value last determined last, to obtain the final timing offset value. Alternatively, when the timing offset value is positive, the UL is an advance. If the timing offset value is negative, the UL is a delay.

(3) The timing offset value is calculated based on a first intermediate value, where the first signaling is used to indicate the first intermediate value, and the first intermediate value is used to calculate the timing offset value. For example, the first intermediate value is $N_{TA}$, and the first communications device can obtain the final timing offset value based on the following formula:

$$N = \left( N_{TA} + N_{TA,offset} \right) * T_c$$

In this formula, $N$ is the final calculated timing offset value. $N_{TA}$ is the first intermediate value indicated by the first signaling. $N_{TA,offset}$ is a predefined or preconfigured offset value. $T_c$ is a predefined or preconfigured time unit value.

(4) The timing offset value is obtained based on one of an initially received first intermediate value $N_{TA\_ini}$ indicated by the first signaling and a last received first intermediate value $N_{TA\_old}$ indicated by the first signaling, and a currently received first intermediate value $N_{TA}$ indicated by the first signaling.

For example, $N_{TA\_new}$ can be obtained by adding or subtracting $N_{TA}$ from $N_{TA\_old}$ or $N_{TA\_new}$ can be obtained by adding or subtracting $N_{TA}$ from $N_{TA\_ini}$. Then the final timing offset value can be obtained according to the following formula:

$$N = \left( N_{TA\_new} + N_{TA,offset} \right) * T_c$$

In this formula, $N$ is the final calculated timing offset value. $N_{TA,offset}$ is a predefined or preconfigured offset value. $T_c$ is a predefined or preconfigured time unit value.

Optionally, the first signaling mentioned in the embodiment 200 is used to indicate a first value, and an interval range of the first value is [K1, K2], where both K1 and K2 are positive; both K1 and K2 are negative; both K1 and K2 are non positive; both K1 and K2 are non negative; or K1 is negative and K2 is positive. In one example, the first signaling is a MAC CE, and a range of the first value indicated by the MAC CE is [-3878, 0].

It should be noted that the first value mentioned in each embodiment of this application can correspond to (or be directly equal to) the indicated value of the first signaling, the offset value indicated by the first signaling, the first intermediate value, and the like in the above four examples.

Optionally, for the first signaling newly defined in the embodiment 200 and the still existing second signaling used to indicate or configure TA in the related art, the following embodiments of this application provide several solutions on how to select the first signaling and the second signaling.

Example 1: The first signaling is used to indicate the first value, and an interval range of the first value is [-A, +B]. The second signaling is used to indicate a second value, and an interval range of the second value is [-a, +b], where A>a, B>b, and b>-a, for example: a=31, and b=32. In Example 1, if the required indication value (first value) is within [-a, b], the first signaling can be used to configure or indicate the timing offset value for the first communications device, and the second signaling can also be used to configure or indicate the timing offset value (may specifically be TA) for the first communications device. In another case, for example, if the required indication value (first value) is within [-A, -(a+1)] and [b+1, +B], the first signaling can be used to configure or indicate the timing offset value for the first communications device, but the second signaling cannot be used, because the required indication value exceeds a range that the second signaling can indicate.

Example 2: The first signaling is used to indicate the first value, and the interval range of the first value is [-A, -(a+1)] and [b+1, +B]. The second signaling is used to indicate the second value, and the interval range of the second value is [-a, +b], where A>a, B>b, and b>-a, for example: a=31, and b=32. In Example 2, if the required indication value (first value) is within [-a, b], the second signaling can be used to configure or indicate the timing offset value (may specifically be TA) for the first communications device. In another case, for example, if the required indication value (first value) is within [-A, -(a+1)] and [b+1, +B], the first signaling can be used to configure or indicate the timing offset value for the first communications device.

Example 3: The first signaling is used to indicate the first intermediate value, and an interval range of the first intermediate value is [-C, -(a+1)]. The second signaling is used to indicate the second value, and the interval range of the second value is [-a, +b], where C>a, and b>-a, for example: a=31, and b=32. In Example 3, if the required indication value (first intermediate value) is within [-a, b], the second signaling can be used to configure or indicate the timing offset value (may specifically be TA) for the first communications device. In another case, for example, if the required indication value (first intermediate value) is within [-C, -(a+1)], the first signaling can be used to configure or indicate the timing offset value for the first communications device.

In the above Example 1 to Example 3, the first signaling is received in a case that the first value is within [-A, -(a+1)] or [b+1, +B].

Optionally, A, a, B, b, and C in the above Example 1 to Example 3 are all positive values.

Optionally, the first signaling in the foregoing embodiments further includes first indication information, and the first indication information is used to indicate whether the timing offset value is a positive or negative value, or whether the timing offset value is reversed. The following provides description with reference to several specific examples.

Example 1: The first signaling is MAC CE signaling, and the first information is indicated by M1 bit of the MAC CE signaling. In this embodiment, the timing offset value can be indicated to be positive or negative in an explicit indication manner. Alternatively, the first information is indicated by RRC.

Optionally, the M1 bit above is specifically in a MAC CE header (header), and the M1 bit may specifically be 1 bit. This example can specifically redefine an R (that is, reserved) bit in an existing TAC MAC CE header to form a newly defined MAC CE. For example, when 1 bit is reserved bit (Reserved bit), the newly defined MAC CE indicates a value less than -31, for example, when 1 bit is reserved bit, a range of indicated negative value is [-32, -95]. Optionally, the newly defined MAC CE uses a new LCID identity.

Example 2: the first signaling carries random access response RAR information, and the first information is indicated by M2 bit in the RAR information. For example, 1 bit R of the RAR is used to indicate that the timing offset value is positive or negative.

Example 3: The first signaling includes an RAR. The first information is indicated by a specific code point in a channel state information (Channel state information, CSI) request field of the RAR, or the first information is indicated by a specific code point in UL grant of the RAR information.

In Example 3, for example, the CSI request field in the RAR is used to distinguish whether the RAR is positive or negative. In Example 3, for another example, the specific code point in the UL grant of the RAR is used to indicate whether the RAR is positive or negative, specifically, a frequency domain resource allocation field/a time domain resource allocation field/a specific code point of a MCS is used for the indication.

Example 4: The first signaling carries the RAR, and the first information is indicated by M3 bit of a second MAC CE header of the first signaling. The second MAC CE header may be one of the headers of the MAC CE including the above RAR. In this example, the RAR header may be newly defined. 1 bit in the header indicates that the timing offset value indicated by the RAR is positive or negative.

Optionally, the first signaling in Examples 1 to 4 is used to indicate a timing offset value of one or a plurality of first communications devices in a timing offset value group, or to indicate a timing offset value of one or a plurality of first communications devices in a cell.

Based on Examples 1 to 4, the first signaling received from the second communications device in the embodiment 200 includes: receiving the first signaling based on capability information of the first communications device, where the capability information indicates whether the first communications device can receive the first signaling. In this example, the first communications device can report capability (capability) thereof, or a protocol stipulates that the first communications device must support this capability, so that the second communications device can consider whether the first communications device can receive the first signaling based on the capability of the first communications device. For example, only an evolved IAB/UE can receive the first signaling. A traditional IAB/UE cannot receive/demodulate the first signaling. The traditional IAB/UE is IAB/UE that supports existing protocol functions.

Based on Examples 1 to 4, the first communications device in the embodiment 200 still adjusts the transmission when the timing offset value is negative. In the related art, if the TA value calculated by the first communications device is negative, no adjustment is made.

Optionally, in the embodiment 200, the first signaling is used to indicate the first value, and the obtaining a timing offset value based on the first signaling includes determining the timing offset value based on the first value and at least one of the following: a time domain unit offset value, and subcarrier spacing SCS.

The time domain unit offset value is a value indicated or configured by a MAC CE/RRC/a master information block (Master Information Block, MIB)/a system information block (System Information Block, SIB)/RAR indication/F1-AP signaling indication/a BAP PDU. Before this embodiment, the first communications device can further receive third signaling, where the third signaling is used to indicate or configure the time domain unit offset value.

The SCS may be a reference SCS. The reference SCS is a value indicated or configured by a MAC CE/RRC/a MIB/a SIB/RAR indication/F1-AP signaling indication/a BAP PDU, a predefined value, or a value obtained based on a predefined rule of a protocol. Optionally, the SCS is indicated or configured by a received fourth signaling, the SCS is predefined, or the SCS is obtained based on a predefined rule.

This embodiment assists the indication of the timing offset value by introducing a concept of the time domain unit offset value (such as OFDM symbol offset) and/or SCS. To be specific, the final timing offset value is related to an indicated value of the first signaling, the time domain unit offset value, and/or the SCS.

The SCS in this embodiment may further be a maximum/minimum SCS in UL and/or DL of a serving cell (serving cell) (the UL of the serving cell can include/exclude SUL), a maximum/minimum SCS in the UL and/or the DL of all cells in a TAG (the UL of the serving cell can include/exclude SUL), or SCS of the SUL.

Optionally, in the embodiment 200, the obtaining a timing offset value based on the first signaling includes obtaining the timing offset value by superposing or combining first values separately indicated by a plurality of pieces of the first signaling. This embodiment considers that a quantity of adjustable negative offset values of one MAC CE is limited, and superposing/combining a plurality of MAC CEs can achieve a wider range of indication of negative TA/$N_{TA}$. The first signaling in this embodiment may be equivalent to the second signaling mentioned above. This example can obtain one timing offset value through indication of a plurality of MAC CEs (called first signaling or second signaling).

Optionally, in the foregoing embodiments, the first signaling is used to separately indicate a timing offset value of at least one cell.

In one example, the first signaling includes at least one of the following: an identity of at least one of the cells (such as an index); and SCS information, where the SCS information is used to obtain SCS, and the SCS is used to obtain the timing offset value.

In a case that the first signaling includes a cell index, for example, cell 1, cell 2, and cell 5 need timing adjustment, the indication of the MAC CE is: cell 1, timing offset value 1; cell 2, timing offset value 2; and cell 5, timing offset value 5. Alternatively, for example: cell 2, timing offset value 2; cell 1, timing offset value 1; and cell 5, timing offset value 5.

In another example, the first signaling does not include the cell index, and a plurality of offset values are sorted according to the cell index. To be specific, a position of the timing offset value of the at least one cell in the first signaling is obtained based on an identity of the at least one of the cells and/or a predefined rule. For example, one MAC CE carries five TA commands: cell 1 to cell 5. Then the signaling carried in the MAC CE is: timing offset value 1, timing offset value 2, timing offset value 3, timing offset value 4, and timing offset value 5. If the TA of a cell is not adjusted, the TA value is set to a special code point (for example, 0). The predefined rule may be in default sorting: cell 1 to cell 10. In this case, a parameter of the cell identity does not appear explicitly in the first signaling.

Optionally, the first signaling is dynamic scheduling signaling, and the dynamic scheduling signaling is used to indicate a timing offset value of corresponding uplink (LTL) information. For example, in a case that the dynamic scheduling signaling is downlink control information (Downlink Control Information, DCI) and the uplink information is a physical uplink shared channel (Physical Uplink Shared Channel, PUSCH), the DCI scheduling information indicates the timing offset value of the PUSCH. The DCI and the DCI scheduling the PUSCH may be the same or different. Optionally, the uplink information may include a PUSCH, may further include a sounding reference signal (Sounding Reference Signal, SRS) accompanying the PUSCH, and may further include a physical uplink control channel (Physical Uplink Control Channel, PUCCH) sent simultaneously with the PUSCH.

This embodiment can introduce a new field in the dynamic scheduling signaling, such as DCI (that is, LTL grant). This field indicates a timing offset value that corresponding PUSCH (and the SRS accompanying the PUSCH and the PUCCH sent simultaneously with the PUSCH) transmission should follow. This field can indicate one or more of the following: an offset signed number, an offset value n (corresponding offset value=$n*16*64/2^u$), and $N_{TA}$. When the received DCI does not carry the field, the PUSCH (and the SRS accompanying the PUSCH and the PUCCH sent simultaneously with the PUSCH) transmission follows traditional TA.

Optionally, the first signaling is dynamic scheduling signaling, where the dynamic scheduling signaling is used to schedule an RAR, and the dynamic scheduling signaling is further used to indicate whether TA obtained based on the RAR is negative or positive. In this embodiment, a judgment basis of "used to schedule an RAR" may be that if the DCI scrambles by using a random access radio network temporary identifier (Random Access Radio Network Temporary Identifier, RA-RNTI), the DCI is used to schedule the RAR.

This embodiment can use 1 bit in DCI format 1-0 to indicate whether the RAR is positive or negative. When the DCI is used to schedule the RAR, the DCI can carry this indication to indicate whether the TA obtained based on the RAR is positive or negative.

Optionally, before S202 in the embodiment 200, the first communications device can also receive the DCI, where the DCI is used to schedule the first signaling. In a case that the DCI is obtained in a specific search space (Search Space, SS) and/or a specific control resource set (Control resource set, CORESET), the timing offset value is negative.

This embodiment can configure the specific search space and/or the control resource set. If the first communications device receives DCI that schedules RAR in the SS or CORESET, the TA value that is indicated by the RAR and is scheduled by the DCI is negative.

Optionally, the timing offset value mentioned in various embodiments of this application may be TA. The TA may be a positive value or a negative value, the TA may be equivalent to the timing offset value mentioned above, and may also indicate different names.

It should be noted that the timing offset value mentioned in various embodiments of this application is different from a definition of traditional TA, but has part of same function of the traditional TA. In the subsequent release protocol, the timing offset value may also be called extended TA. The extended TA includes negative TA.

To describe in detail the timing offset value indication method provided in the foregoing embodiments of this application, the following provides description with reference to several specific embodiments.

Embodiment 1

This embodiment includes the following steps.

Step 1: A parent node (the IAB node 1 in FIG. 3) sends an RAR, and an IAB node 2 (the IAB node 2 in FIG. 3) obtains a TA value based on indication of the RAR, where the TA value is initial TA.

Step 2: A MAC CE carries 1 bit information indicating whether the TA is positive or negative.

(a) If the TA is negative, the TA value is an obtained TA that is reserved.

For example: $TA = -(N_{TA}+N_{TA,offset})^*Tc$, where $N_{TA\_new}=N_{TA\_old}+(TA-31)\cdot16\cdot64/2^u$, $T_A$ is a value indicated by the MAC CE.

In this formula, TA is a final calculated timing offset value. $N_{TA}$ is a value indicated by the RAR. $N_{TA}$ and $N_{TA,offset}$ is a predefined or preconfigured offset value. Tc is a predefined or preconfigured time unit value.

In this example, the RAR can directly carry 12 bits of information, and the directly indicated value is

$T_A$=0, 1, 2, ..., and 3846. The first communications device obtains $N_{TA}=T_A\cdot16\cdot64/2^u$ based on the $T_A$.

(b) If the TA is positive is positive, the TA and the TA value are calculated.

For example: $TA=(N_{TA}+N_{TA,offset})^*Tc$, where $N_{TA\_new}=N_{TA\_old}+(T_A-31)\cdot16\cdot64/2^u$, and $T_A$ is a value indicated by the MAC CE. The specific meaning of this formula is explained in (a) above.

Step 3: The IAB node performs adjustment based on the obtained TA value.

It should be noted that FIG. 3 is a schematic diagram of two hops of IAB. An IAB node 1 is a parent node of an IAB node 2, and an IAB donor (donor) is a parent node of the IAB node 1. The IAB donor is CU control of the IAB node 1 and the IAB node 2. The IAB node 2 is a child node of the IAB node 1. The IAB node 2 is used as reference, and a parent node of the IAB node 2 refers to the IAB node 1.

Embodiment 2

This embodiment includes the following steps.

Step 1: A parent node (the IAB node 1 in FIG. 3) sends an RAR, and an IAB node 2 (the IAB node 2 in FIG. 3) obtains a TA value based on indication of the RAR, where the TA value is initial TA.

Step 2: A MAC CE carries TA indication of N cells (cell). The MAC CE does not carry cell index (index) information, and indicates TA of a cell in an order of a cell ID.

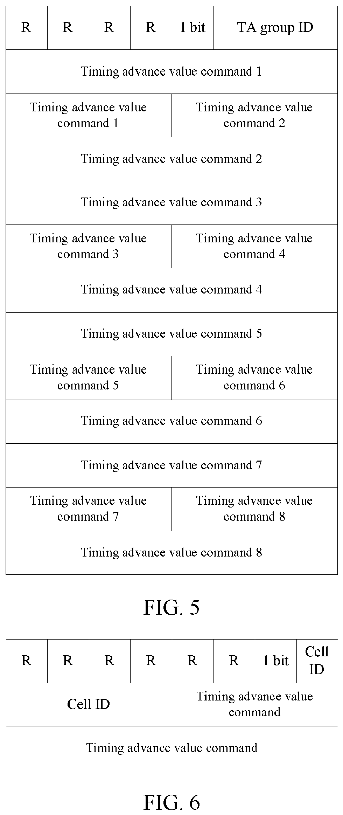

For example, as shown in FIG. 5, if each cell MAC CE needs 12 bits of indication information (calculation based on an extended MAC CE, that is, the first signaling mentioned above, needs to at least reach a range indicated by the RAR, then it can be referred that indication of the RAR is 12 bits).

Step 3: The IAB node performs adjustment based on the obtained TA value.

Embodiment 3

This embodiment includes the following steps.

Step 1: A parent node (the IAB node 1 in FIG. 3) sends an RAR, and an IAB node 2 (the IAB node 2 in FIG. 3) obtains a TA value based on indication of the RAR, where the TA value is initial TA.

Step 2: The first signaling (MAC CE) carries the TA instruction of the cell, and the MAC CE carries the cell index information

For example, if each cell MAC CE needs 12 bits of indication information (calculation based on an extended MAC CE needs to at least reach a range indicated by the RAR, then it can be referred that indication of the RAR is 12 bits), a design of the MAC CE is as shown in FIG. 6, where 1 bity is used to indicate a positive value and negative value, a serving cell ID (referred to as cell ID in FIG. 6) is used to indicate a cell index, and TAC is used to indicate timing.

Step 3: The IAB node performs adjustment based on the obtained TA value.

Embodiment 4

In this embodiment, in FIG. 3, UE accesses an IAB node 1, the IAB node 1 sends an RAR to the UE, and the RAR indicates a timing offset value offset, where the timing offset value is a negative value. Then offset of UE UL lags compared with UE DL.

Embodiment 5

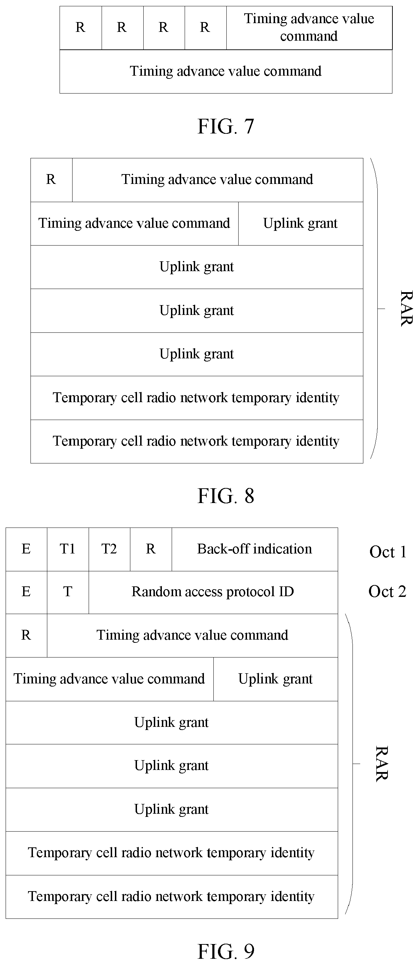

This embodiment uses an Absolute Timing Advance Command MAC CE to obtain a TA value, and uses 1 bit reserved bit to indicate whether a timing offset value indicated by the MAC CE is positive or negative. For example, as shown in FIG. 7, the fourth bit of the first byte is used to indicate whether a TAC is positive or negative. If the bit is 1, it indicates being positive; and if the bit is 0, it indicates being negative, or vice versa.

Embodiment 6

In this embodiment, 1 bit reserved bit in an RAR indicates whether a TA value obtained based on the RAR is positive or negative. As shown in FIG. 8, for example, the first bit of the first byte indicates that if the bit is 1, it indicates being positive, and if the bit is 0, it indicates being negative, or vice versa.

Embodiment 7

This embodiment newly defines a MAC CE header for a MAC CE including an RAR. 1 bit in the header indicates whether the TA value obtained based on the RAR is positive or negative, or whether the TA value obtained based on the RAR is reserved.

As shown in FIG. 9, a reserved bit in the first byte (oct 1) is used to indicate whether the TA value obtained based on the RAR is positive or negative. For example, if the fourth bit of the first byte is 1, it indicates being positive, and if the fourth bit is 0, it indicates being negative, or vice versa.

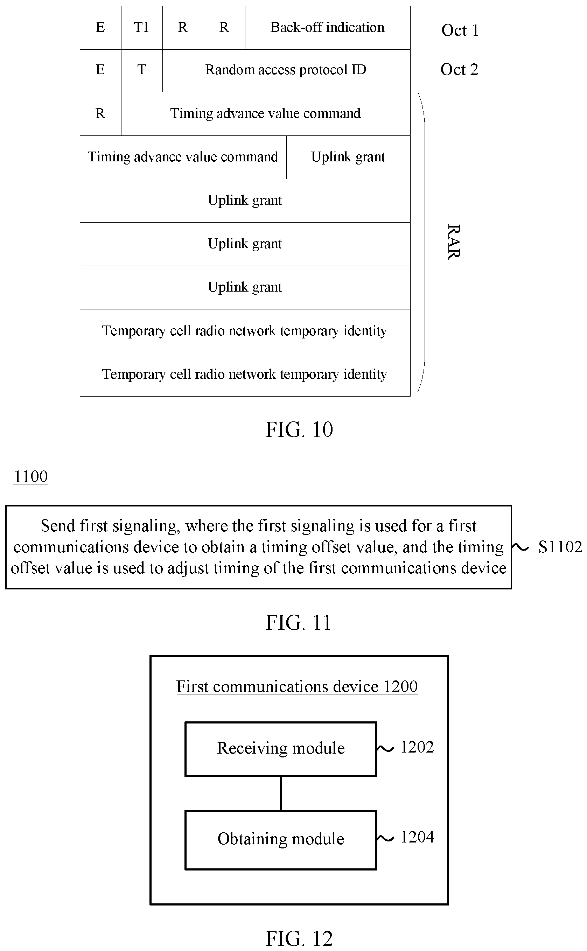

Alternatively, as shown in FIG. 10, the third or fourth bit of the first byte indicates whether the TA value obtained based on the RAR is positive or negative.

An E indication field in FIG. 9 and FIG. 10 is used to indicate whether there is another MAC sub header after a MAC sub header. An R indication field is a reserved field. A T indication field is used to indicate whether the MAC sub header contains random access preamble ID or a BI indication field. AT1 indication field is used to indicate whether the MAC sub header contains the random access preamble ID or a T2. A T2 indication field is used to indicate whether the MAC sub header contains a back-off indication (BI) indication field or a MAC service data unit (Service Data Unit, SDU) indication field.

This embodiment reuses a new subheader, that is, the MAC CE carrying the RAR carries two subheaders. The first byte Oct 1 is a subheader, and the second byte Oct 2 is another subheader.

It should be noted that the TA mentioned in Embodiment 1 to Embodiment 10 above may be the timing offset value mentioned in the embodiments before Embodiment 1.

The foregoing describes in detail a timing offset value indication method according to an embodiment of this application with reference to FIG. 2 to FIG. 10. The following describes in detail a timing offset value indication method according to another embodiment of this application with reference to FIG. 11. It can be understood that the description of the second communications device side is the same as that of the first communications device side in the method shown in FIG. 2 to FIG. 10, and therefore related description is appropriately omitted to avoid repetition.

FIG. 11 is a schematic diagram of an implementation process of a timing offset value indication method which can be applied to a second communications device according to an embodiment of this application. As shown in FIG. 11, the method 1100 includes the following.

S1102: Send first signaling, where the first signaling is used for a first communications device to obtain a timing offset value, and the timing offset value is used to adjust timing of the first communications device.

The first communications device includes an IAB node, and the second communications device includes a parent node of the IAB node, an IAB donor node, or a child IAB node; alternatively, the first communications device includes a terminal, and the second communications device includes an IAB node that serves the terminal or an IAB donor node.

In this embodiment of this application, the second communications device sends the first signaling. In this way, the first communications device can receive the first signaling from the second communications device, and obtain a timing offset value based on the first signaling. The timing offset value is used to adjust timing of the first communications device. This embodiment of this application can meet a need for synchronization between links, to reduce interference between systems, thereby meeting a normal need for communication.

Optionally, in an embodiment, the first signaling further includes first indication information, and the first indication information is used to indicate whether the timing offset value is a positive or negative value, or whether the timing offset value is reversed.

Optionally, in an embodiment, the first signaling is used to separately indicate a timing offset value of at least one cell.

Optionally, in an embodiment, the first signaling is dynamic scheduling signaling, where the dynamic scheduling signaling is used to indicate a timing offset value of corresponding uplink information; or the dynamic scheduling signaling is used to schedule an RAR, and the dynamic scheduling signaling is further used to indicate whether TA obtained based on the RAR is negative or positive.

Optionally, in an embodiment, the method further includes: sending DCI, where the DCI is used to schedule the first signaling, where in a case that the DCI is obtained in a specific search space SS and/or a specific control resource set CORESET, the timing offset value is negative.

Optionally, in an embodiment, the timing offset value is TA, where the TA is positive or negative.

FIG. 12 is a schematic structural diagram of a first communications device according to an embodiment of this application. The first communications device can correspond to an IAB node or a terminal in other embodiments. As shown in FIG. 12, the first communications device 1200 includes:

> a receiving module 1202, configured to receive first signaling from a second communications device; and
> an obtaining module 1204, configured to obtain a timing offset value based on the first signaling, where the timing offset value is used to adjust timing of the first communications device.

The first communications device includes an IAB node, and the second communications device includes a parent node of the IAB node, an IAB donor node, or a child IAB node; alternatively, the first communications device includes a terminal, and the second communications device includes an IAB node that serves the terminal or an IAB donor node.

Optionally, in an embodiment, the receiving module 1202 is configured to perform at least one of the following: receiving the first signaling from the second communications device based on configuration information; and receiving the first signaling from the second communications device based on capability information of the first communications device.

Optionally, in an embodiment, the obtaining module 1204 is configured to: use an indication value of the first signaling as the timing offset value; obtain the timing offset value based on one of an initial timing offset value and a timing offset value last determined, and an offset value indicated by the first signaling; calculate the timing offset value based on a first intermediate value, where the first signaling is used to indicate the first intermediate value, and the first intermediate value is used to calculate the timing offset value; or obtain the timing offset value based on one of an initially received first intermediate value indicated by the first signaling and a last received first intermediate value indicated by the first signaling, and a currently received first intermediate value indicated by the first signaling.

Optionally, in an embodiment, the first signaling is used to indicate a first value, and an interval range of the first value is [K1, K2], where both K1 and K2 are positive; both K1 and K2 are negative; both K1 and K2 are non positive; both K1 and K2 are non negative; or K1 is negative and K2 is positive.

Optionally, in an embodiment, the first signaling is used to indicate a first value, where an interval range of the first value is [-A, +B]; the interval range of the first value is [-A, -(a+1)] and [b+1, +B]; or the interval range of the first value is [-C, -(a+1)]; and second signaling is used to indicate a second value, and an interval range of the second value is [-a, +b], where A>a, C>a, B>b, and b>-a.

Optionally, in an embodiment, the first signaling is received in a case that the first value is within a range of [-A, -(a+1)] or [b+1, +B].

Optionally, in an embodiment, the first signaling further includes first indication information, and the first indication information is used to indicate whether the timing offset value is a positive or negative value, or whether the timing offset value is reversed.

Optionally, in an embodiment, the first signaling is media access control control element MAC CE signaling, and first information is indicated by M1 bit of the MAC CE signaling, or the first information is indicated by RRC.

Optionally, in an embodiment, the first signaling includes a random access response RAR, where the first information is indicated by M2 bit in the RAR.

Optionally, in an embodiment, the first signaling includes the RAR, where the first information is indicated by a specific code point in a channel state information CSI request field of the RAR, or the first information is indicated by a specific code point in uplink grant of the RAR.

Optionally, in an embodiment, the first signaling includes the RAR, where the first information is indicated by M3 bit in a second MAC CE header of the first signaling.

Optionally, in an embodiment, the first signaling is used to indicate a timing offset value of the first communications device in a timing offset value group or a timing offset value of the first communications device in a cell.

Optionally, in an embodiment, the first signaling is used to indicate a first value, where the obtaining a timing offset value based on the first signaling includes determining the timing offset value based on the first value and at least one of the following: a time domain unit offset value, and subcarrier spacing SCS.

Optionally, in an embodiment, the receiving module 1202 is further configured to receive third signaling, where the third signaling is used to indicate or configure the time domain unit offset value.

Optionally, in an embodiment, the SCS is indicated or configured by a received fourth signaling; a SCS value is predefined; or the SCS value is obtained based on a predefined rule.

Optionally, in an embodiment, the obtaining module 1204 is configured to obtain the timing offset value by superposing or combining first values separately indicated by a plurality of pieces of the first signaling.

Optionally, in an embodiment, the first signaling is used to separately indicate a timing offset value of at least one cell.

Optionally, in an embodiment, the first signaling includes at least one of the following: an identity of the cell; and SCS information, where the SCS information is used to obtain SCS, and the SCS is used to obtain the timing offset value.

Optionally, in an embodiment, a position of the timing offset value of the at least one cell in the first signaling is obtained based on an identity of the at least one cell and/or a predefined rule.

Optionally, in an embodiment, the first signaling is dynamic scheduling signaling, and the dynamic scheduling signaling is used to indicate a timing offset value of corresponding uplink information.

Optionally, in an embodiment, the first signaling is dynamic scheduling signaling, where the dynamic scheduling signaling is used to schedule an RAR, and the dynamic scheduling signaling is further used to indicate whether TA obtained based on the RAR is negative or positive.

Optionally, in an embodiment, the receiving module 1202 is further configured to receive downlink control information DCI, where the DCI is used to schedule the first signaling, and in a case that the DCI is obtained in a specific search space SS and/or a specific control resource set CORESET, the timing offset value is negative.

Optionally, in an embodiment, the timing offset value is TA, where the TA is positive or negative.

For the apparatus 1200 according to this embodiment of this application, reference may be made to the processes of the method 200 in the corresponding embodiment of this application, and the units/modules of the apparatus 1200 and other operations and/or functions described above are respectively intended to implement the corresponding processes in the method 200, with the same or equivalent technical effects achieved. For brevity, details are not repeated herein.

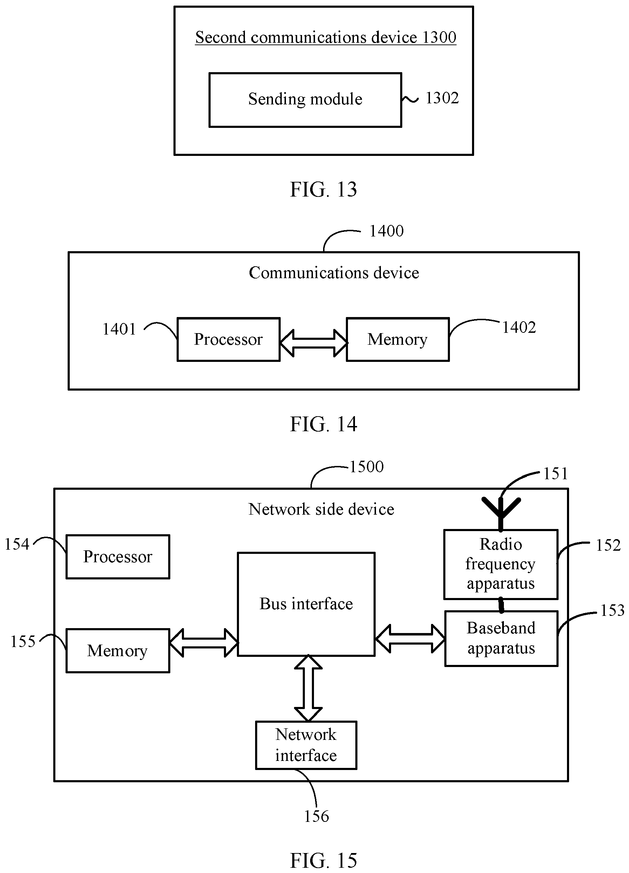

FIG. 13 is a structural diagram of a second communications device according to an embodiment of this application. The second communications device can correspond to an IAB node, an IAB donor or an IAB sub node in other embodiments. As shown in FIG. 13, the second communications device 1300 includes:

a sending module 1300, configured to send first signaling, where the first signaling is used for a first communications device to obtain a timing offset value, and the timing offset value is used to adjust timing of the first communications device. The first communications device includes an integrated access and backhaul IAB node, and the second communications device includes a parent node of the IAB node, an IAB donor node, or a child IAB node; alternatively, the first communications device includes a terminal, and the second communications device includes an IAB node that serves the terminal or an IAB donor node.

In this embodiment of this application, the second communications device sends the first signaling. In this way, the first communications device can receive the first signaling from the second communications device, and obtain a timing offset value based on the first signaling. The timing offset value is used to adjust timing of the first communications device. This embodiment of this application can meet a need for synchronization between links, to reduce interference between systems, thereby meeting a normal need for communication.

Optionally, in an embodiment, the first signaling further includes first indication information, and the first indication information is used to indicate whether the timing offset value is a positive or negative value, or whether the timing offset value is reversed.

Optionally, in an embodiment, the first signaling is used to separately indicate a timing offset value of at least one cell.

Optionally, in an embodiment, the first signaling is dynamic scheduling signaling, where the dynamic scheduling signaling is used to indicate a timing offset value of corresponding uplink information; or the dynamic scheduling signaling is used to schedule an RAR, and the dynamic scheduling signaling is further used to indicate whether TA obtained based on the RAR is negative or positive.

Optionally, in an embodiment, the sending module 1300 is further configured to send DCI, where the DCI is used to schedule the first signaling, and in a case that the DCI is obtained in a specific search space SS and/or a specific control resource set CORESET, the timing offset value is negative.

Optionally, in an embodiment, the timing offset value is TA, where the TA is positive or negative.

For the second communications device 1300 according to this embodiment of this application, reference may be made to the processes of the method 1100 in the corresponding embodiment of this application, and the units/modules of the communications device 1300 and other operations and/or functions described above are respectively intended to implement the corresponding processes in the method 1100, with the same or equivalent technical effects achieved. For brevity, details are not repeated herein.

Optionally, as shown in FIG. 14, an embodiment of this application further provides a communications device 1400, including a processor 1401, a memory 1402, and a program or an instruction stored in the memory 1402 and capable of running on the processor 1401. For example, when the communications device 1400 is a terminal, and the program or the instruction is executed by the processor 1401, the processes of the foregoing timing offset value indication method embodiments are implemented, with the same technical effects achieved. When the communications device 1400 is the second communications device mentioned above, and the program or the instruction is executed by the processor 1401, the processes of the foregoing timing offset value indication method embodiment are implemented, with the same technical effects achieved. To avoid repetition, details are not described herein again.

Specifically, an embodiment of this application further provides a network-side device. The network-side device may be the IAB node or the IAB donor as described above. As shown in FIG. 15, the network-side device 1500 includes an antenna 151, a radio frequency apparatus 152, and a baseband apparatus 153. The antenna 151 is connected to the radio frequency apparatus 152. In an uplink direction, the radio frequency apparatus 152 receives information by using the antenna 151, and sends the received information to the baseband apparatus 153 for processing. In a downlink direction, the baseband apparatus 153 processes information to be sent and sends the information to the radio frequency apparatus 152, and the radio frequency apparatus 152 processes the received information and sends the information through the antenna 151.

The frequency band processing apparatus may be located in the baseband apparatus 153. The method performed by the network-side device in the foregoing embodiment may be implemented in the baseband apparatus 153. The baseband apparatus 153 includes a processor 154 and a memory 155.

The baseband apparatus 153 may include, for example, at least one baseband board, where a plurality of chips are disposed on the baseband board. As shown in FIG. 15, one chip is, for example, the processor 154, which is connected to the memory 155, so as to invoke a program in the memory 155 to perform operations of the network device shown in the foregoing method embodiment.

The baseband apparatus 153 may further include a network interface 156, configured to exchange information with the radio frequency apparatus 152, where the interface is, for example, a common public radio interface (common public radio interface, CPRI).

Specifically, the network-side device in this embodiment of this application further includes an instruction or a program in the memory 155 and capable of running on the processor 154. The processor 154 invokes the instruction or the program in the memory 155 to perform the method performed by the modules shown in FIG. 12 or FIG. 13, with the same technical effects achieved. To avoid repetition, details are not described herein again.

An embodiment of this application further provides a readable storage medium, where the readable storage medium stores a program or an instruction, and when the program or the instruction is executed by a processor, the processes of the embodiments of the foregoing timing offset value indication method are implemented, with the same technical effect achieved. To avoid repetition, details are not described herein again.

The processor is a processor in the terminal in the foregoing embodiment. The readable storage medium includes a computer-readable storage medium such as a read-only memory (Read-Only Memory, ROM), a random access memory (Random Access Memory, RAM), a magnetic disk, or an optical disc.

An embodiment of this application further provides a chip. The chip includes a processor and a communications interface, and the communications interface is coupled to the processor. The processor is configured to run a program or an instruction to implement various processes of the foregoing timing offset value indication method embodiment, with the same technical effects achieved. To avoid repetition, details are not described herein again.

It should be understood that the chip mentioned in this embodiment of this application may also be referred to as a system-level chip, a system chip, a system on chip, a system chip on chip, and the like.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. In the absence of more restrictions, an element defined by the statement "including a..." does not preclude the presence of other identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementation manners, a person skilled in the art may clearly understand that the method in the foregoing embodiment may be implemented by software in addition to a necessary universal hardware platform or by hardware only. In most circumstances, the former is a preferred implementation manner. Based on such understanding, the technical solutions of this application essentially, or the part contributing to the prior art may be implemented in a form of a software product. The computer software product is stored in a storage medium (for example, a ROM/RAM, a magnetic disk, or a compact disc), and includes several instructions for instructing a terminal (which may be a mobile phone, a computer, a server, an air conditioner, a network device, or the like) to perform the method described in the embodiments of this application.

The embodiments of this application are described above with reference to the accompanying drawings, but this application is not limited to the foregoing specific implementation manners. The foregoing specific implementation manners are merely schematic instead of restrictive. Under enlightenment of this application, a person of ordinary skills in the art may make many forms without departing from aims and the protection scope of claims of this application, all of which fall within the protection scope of this application.

## Claims

1. A timing offset value indication method, applied to a first communications device, wherein the method comprises:

   receiving first signaling from a second communications device; and
   obtaining a timing offset value based on the first signaling, wherein the timing offset value is used to adjust timing of the first communications device, wherein
   the first communications device comprises an integrated access and backhaul IAB node, and the second communications device comprises a parent node of the IAB node, an IAB donor node, or a child IAB node; alternatively, the first communications device comprises a terminal, and the second communications device comprises an IAB node that serves the terminal or an IAB donor node.

2. The method according to claim 1, wherein the receiving first signaling from a second communications device comprises at least one of the following:

   receiving the first signaling from the second communications device based on configuration information; and
   receiving the first signaling from the second communications device based on capability information of the first communications device.

3. The method according to claim 1, wherein the obtaining a timing offset value based on the first signaling comprises:

   using an indication value of the first signaling as the timing offset value;
   obtaining the timing offset value based on one of an initial timing offset value and a timing offset value last determined, and an offset value indicated by the first signaling;

calculating the timing offset value based on a first intermediate value, wherein the first signaling is used to indicate the first intermediate value, and the first intermediate value is used to calculate the timing offset value; or
obtaining the timing offset value based on one of an initially received first intermediate value indicated by the first signaling and a last received first intermediate value indicated by the first signaling, and a currently received first intermediate value indicated by the first signaling.

4. The method according to claim 1, wherein the first signaling is used to indicate a first value, and an interval range of the first value is [K1, K2], wherein

   both K1 and K2 are positive; both K1 and K2 are negative; or both K1 and K2 are non positive; or both K1 and K2 are non negative; or K1 is negative and K2 is positive.

5. The method according to claim 1, wherein the first signaling is used to indicate a first value, wherein an interval range of the first value is [-A, +B]; the interval range of the first value is [-A, -(a+1)] and [b+1, +B]; or the interval range of the first value is [-C, -(a+1)]; and

   second signaling is used to indicate a second value, and an interval range of the second value is [-a, +b]; wherein
   A>a, C>a, B>b, and b>-a.

6. The method according to claim 5, wherein the first signaling is received in a case that the first value is within a range of [-A, -(a+1)] or [b+1, +B].

7. The method according to claim 1, wherein the first signaling further comprises first indication information, and the first indication information is used to indicate whether the timing offset value is a positive or negative value, or whether the timing offset value is reversed.

8. The method according to claim 7, wherein the first signaling is media access control control element MAC CE signaling, and first information is indicated by M1 bit of the MAC CE signaling, or the first information is indicated by RRC.

9. The method according to claim 7, wherein the first signaling comprises a random access response RAR, and first information is indicated by M2 bit in the RAR.

10. The method according to claim 7, wherein the first signaling comprises an RAR;

first information is indicated by a specific code point in a channel state information CSI request field of the RAR; or

first information is indicated by a specific code point in uplink grant of the RAR.

11. The method according to claim 7, wherein the first signaling comprises an RAR, and first information is indicated by M3 bit of a second MAC CE header of the first signaling.

12. The method according to claim 7, wherein the first signaling is used to indicate a timing offset value of the first communications device in a timing offset value group or a timing offset value of the first communications device in a cell.

13. The method according to claim 1, wherein the first signaling is used to indicate a first value, and the obtaining a timing offset value based on the first signaling comprises:

determining the timing offset value based on the first value and at least one of the following: a time domain unit offset value, and subcarrier spacing SCS.

14. The method according to claim 13, wherein the method further comprises receiving third signaling, wherein the third signaling is used to indicate or configure the time domain unit offset value.

15. The method according to claim 13, wherein the SCS is indicated or configured by a received fourth signaling; the SCS is predefined; or the SCS is obtained based on a predefined rule.

16. The method according to claim 1, wherein the obtaining a timing offset value based on the first signaling comprises:

obtaining the timing offset value by superposing or combining first values separately indicated by a plurality of pieces of the first signaling.

17. The method according to claim 1, wherein the first signaling is used to separately indicate a timing offset value of at least one cell.

18. The method according to claim 17, wherein the first signaling comprises at least one of the following:

an identity of the cell; and
SCS information, wherein the SCS information is used to obtain SCS, and the SCS is used to obtain the timing offset value.

19. The method according to claim 17, wherein a position of the timing offset value of the at least one cell in the first signaling is obtained based on an identity of the at least one cell and/or a predefined rule.

20. The method according to claim 1, wherein the first signaling is dynamic scheduling signaling, and the dynamic scheduling signaling is used to indicate a timing offset value of corresponding uplink LTL information.

21. The method according to claim 1, wherein the first signaling is dynamic scheduling signaling, wherein the dynamic scheduling signaling is used to schedule an RAR, and the dynamic scheduling signaling is further used to indicate whether TA obtained based on the RAR is negative or positive.

22. The method according to claim 1, wherein the method further comprises receiving downlink control information DCI, wherein the DCI is used to schedule the first signaling; and

in a case that the DCI is obtained in a specific search space SS and/or a specific control resource set CORESET, the timing offset value is negative.

23. The method according to claim 1, wherein the timing offset value is TA, wherein the TA is positive or negative.

24. A timing offset value indication method, applied to a second communications device, wherein the method comprises:

sending first signaling, wherein the first signaling is used for a first communications device to obtain a timing offset value, and the timing offset value is used to adjust timing of the first communications device, wherein

the first communications device comprises an integrated access and backhaul IAB node, and the second communications device comprises a parent node of the IAB node, an IAB donor node, or a child IAB node; alternatively, the first communications device comprises a terminal, and the second communications device comprises an IAB node that serves the terminal or an IAB donor node.

25. The method according to claim 24, wherein the first signaling further comprises first indication information, and the first indication information is used to indicate whether the timing offset value is a positive or negative value, or whether the timing offset value is reversed.

26. The method according to claim 24, wherein the first signaling is used to separately indicate a timing offset value of at least one cell.

27. The method according to claim 24, wherein the first signaling is dynamic scheduling signaling, wherein

the dynamic scheduling signaling is used to indicate a timing offset value of corresponding uplink information;

or

the dynamic scheduling signaling is used to schedule an RAR, and the dynamic scheduling signaling is further used to indicate whether TA obtained based on the RAR is negative or positive.

28. The method according to claim 24, wherein the method further comprises sending DCI, wherein the DCI is used to schedule the first signaling; and

in a case that the DCI is obtained in a specific search space SS and/or a specific control resource set CORESET, the timing offset value is negative.

29. The method according to claim 24, wherein the timing offset value is TA, wherein the TA is positive or negative.

30. A first communications device, comprising:

a receiving module, configured to receive first signaling from a second communications device; and

an obtaining module, configured to obtain a timing offset value based on the first signaling, wherein the timing offset value is used to adjust timing of the first communications device, wherein

the first communications device comprises an integrated access and backhaul IAB node, and the second communications device comprises a parent node of the IAB node, an IAB donor node, or a child IAB node; alternatively, the first communications device comprises a terminal, and the second communications device comprises an IAB node that serves the terminal or an IAB donor node.

31. A second communications device, comprising:

a sending module, configured to send first signaling, wherein the first signaling is used for a first communications device to obtain a timing offset value, and the timing offset value is used to adjust timing of the first communications device, wherein

the first communications device comprises an integrated access and backhaul IAB node, and the second communications device comprises a parent node of the IAB node, an IAB donor node, or a child IAB node; alternatively, the first communications device comprises a terminal, and the second communications device comprises an IAB node that serves the terminal or an IAB donor node.

32. A communications device, comprising a processor, a memory, and a program or an instruction stored in the memory and capable of running on the processor, wherein when the program or the instruction is executed by the processor, the timing offset value indication method according to any one of claims 1 to 23 are implemented, or the timing offset value indication method according to any one of claims 24 to 29 are implemented.

33. A readable storage medium, wherein the readable storage medium stores a program or an instruction, and when the program or the instruction is executed by a processor, the timing offset value indication method according to any one of claims 1 to 23 is implemented, or the timing offset value indication method according to any one of claims 24 to 29 is implemented.

34. A chip, wherein the chip comprises a processor and a communications interface, the communications interface is coupled to the processor, and the processor is configured to run a program or an instruction, to implement the timing offset value indication method according to any one of claims 1 to 23, or the timing offset value indication method according to any one of claims 24 to 29.

Network-side
device

Access
device

Access
device

Terminal

FIG. 1

200

Receive first signaling from a second communications device ~ S202

Obtain a timing offset value based on the first signaling,
where the timing offset value is used to adjust timing of a
first communications device ~ S204

FIG. 2

IAB node 1

Terminal

IAB donor

IAB node 2

FIG. 3

IAB donor — DL

UL

TA

Tp 1

IAB node 1 — MT DL

MT UL

DU DL

DU UL

IAB node 2/UE — UE DL/MT DL

UE UL/MT UL

Tp 2

Timing offset value

FIG. 4

| R | R | R | R | 1 bit | TA group ID |
|---|---|---|---|-------|-------------|
| Timing advance value command 1 ||||||
| Timing advance value command 1 ||| Timing advance value command 2 |||
| Timing advance value command 2 ||||||
| Timing advance value command 3 ||||||
| Timing advance value command 3 ||| Timing advance value command 4 |||
| Timing advance value command 4 ||||||
| Timing advance value command 5 ||||||
| Timing advance value command 5 ||| Timing advance value command 6 |||
| Timing advance value command 6 ||||||
| Timing advance value command 7 ||||||
| Timing advance value command 7 ||| Timing advance value command 8 |||
| Timing advance value command 8 ||||||

FIG. 5

| R | R | R | R | R | R | 1 bit | Cell ID |
|---|---|---|---|---|---|-------|---------|
| Cell ID |||| Timing advance value command |||
| Timing advance value command ||||||||

FIG. 6

| R | R | R | R | Timing advance value command |
|---|---|---|---|---|
| Timing advance value command |||||

FIG. 7

| R | Timing advance value command | |
|---|---|---|
| Timing advance value command || Uplink grant |
| Uplink grant |||
| Uplink grant |||
| Uplink grant |||
| Temporary cell radio network temporary identity |||
| Temporary cell radio network temporary identity |||

RAR

FIG. 8

| E | T1 | T2 | R | Back-off indication | | Oct 1 |
|---|---|---|---|---|---|---|
| E | T || Random access protocol ID || Oct 2 |
| R | Timing advance value command |||||
| Timing advance value command |||| Uplink grant ||
| Uplink grant ||||||
| Uplink grant ||||||
| Uplink grant ||||||
| Temporary cell radio network temporary identity ||||||
| Temporary cell radio network temporary identity ||||||

RAR

FIG. 9

| E | T1 | R | R | Back-off indication | Oct 1 |
|---|----|----|----|----|----|
| E | T | | Random access protocol ID | | Oct 2 |
| R | | Timing advance value command | | | |
| Timing advance value command | | | | Uplink grant | |
| Uplink grant | | | | | |
| Uplink grant | | | | | |
| Uplink grant | | | | | |
| Temporary cell radio network temporary identity | | | | | |
| Temporary cell radio network temporary identity | | | | | |

RAR

FIG. 10

1100

Send first signaling, where the first signaling is used for a first communications device to obtain a timing offset value, and the timing offset value is used to adjust timing of the first communications device ∽ S1102

FIG. 11

First communications device 1200

Receiving module ∽ 1202

Obtaining module ∽ 1204

FIG. 12

Second communications device 1300

Sending module ∿ 1302

FIG. 13

1400

Communications device

1401 Processor ⟷ Memory 1402

FIG. 14

1500          151

Network side device

154 Processor

Bus interface

Radio frequency apparatus 152

155 Memory ⟷ ⟷ Baseband apparatus 153

Network interface

156

FIG. 15

## INTERNATIONAL SEARCH REPORT

| International application No. |
| --- |
| **PCT/CN2021/104310** |

### A. CLASSIFICATION OF SUBJECT MATTER

H04W 56/00(2009.01)i

According to International Patent Classification (IPC) or to both national classification and IPC

### B. FIELDS SEARCHED

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

EPODOC, WPI, CNPAT, CNKI, 3GPP: 自回传, 综合接入与回程, 定时偏移, 定时提前, 父节点, 宿主, 信令, 能力, 同步, IAB, TA, time, advanced, offset, donor, parent, node, signaling, capability, synchronization

### C. DOCUMENTS CONSIDERED TO BE RELEVANT

| Category* | Citation of document, with indication, where appropriate, of the relevant passages | Relevant to claim No. |
| --- | --- | --- |
| X | US 2020059879 A1 (QUALCOMM INCORPORATED) 20 February 2020 (2020-02-20) description paragraphs 9-11, 36-39, 70-74, figures 1-9 | 1-34 |
| A | WO 2020035947 A1 (NTT DOCOMO, INC.) 20 February 2020 (2020-02-20) entire document | 1-34 |
| A | WO 2020065037 A1 (TELEFONAKTIEBOLAGET LM ERICSSON (PUBL)) 02 April 2020 (2020-04-02) entire document | 1-34 |
| A | NOKIA et al. "IAB timing" *3GPP TSG RAN WG1 Meeting #92bis R1-1804624*, 20 April 2018 (2018-04-20), entire document | 1-34 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **19 September 2021** | **28 September 2021** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2021/104310**

| Patent document cited in search report | | | Publication date (day/month/year) | Patent family member(s) | | | Publication date (day/month/year) |
|---|---|---|---|---|---|---|---|
| US | 2020059879 | A1 | 20 February 2020 | CN | 112585886 | A | 30 March 2021 |
| | | | | WO | 2020036961 | A1 | 20 February 2020 |
| WO | 2020035947 | A1 | 20 February 2020 | None | | | |
| WO | 2020065037 | A1 | 02 April 2020 | CN | 112740774 | A | 30 April 2021 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010637358